# EUROPEAN PATENT APPLICATION

(11) **EP 0 931 714 A1**
(43) Date of publication of application: **28.07.1999**
(21) Application number: 99101066.1
(22) Date of filing: 25.01.1999
(51) Int. Cl.: B62D 5/04

(54) **Electric steering system with speed reducer**

(30) Priority: 23.01.1998 US 12634
(71) Applicant: TRW INC., Lyndhurst Ohio 44124 (US)
(72) Inventor: Cheng, Wangquan, Troy, Michigan 48098 (US)
(74) Representative: Wagner, Karl H., Dipl.-Ing.

(57) **Abstract**

An electric power assist rack and pinion steering system (10) for a vehicle includes a rack (14) movable linearly to effect steering movement of steerable wheels (16) of the vehicle. A first pinion (30) in engagement with the rack (14) is connected with the vehicle steering wheel (12) for rotation about a first axis (32) to move the rack linearly in response to rotation of the vehicle steering wheel. An electric assist motor (40) has a shaft (42) rotatable about a second axis (52) spaced along the rack (14) from the first axis (32). A second pinion (50) in engagement with the rack (14) is rotatable about the second axis (52) by the motor (40). A cycloidal speed reducer (60) is connected between the motor shaft (42) and the second pinion (50).

## Description

### Background of the Invention

A rack and pinion vehicle steering system includes a rack which is movable linearly to effect turning movement of the steerable wheels of the vehicle. In one type of rack and pinion steering system, the rack extends axially through an electric assist motor. Actuation of the motor rotates a ball nut which is engaged with a screw portion of the rack. The rotating ball nut drives the rack linearly. The ball nut acts as a speed reducer between the motor and the rack.

In another type of electrically powered steering system, the vehicle steering wheel is connected for rotation with a first pinion. An electric assist motor drives a second pinion which is spaced along the rack from the first pinion. A separate speed reducer, such as a helical gear speed reducer, is interposed between the motor and the second pinion.

### Summary of the Invention

The present invention is an electric power assist rack and pinion steering system for a vehicle having steerable wheels movable upon rotation of a vehicle steering wheel. The system comprises a rack movable linearly to effect steering movement of the steerable wheels of the vehicle. A first pinion in engagement with the rack is connected with the vehicle steering wheel for rotation about a first axis to move the rack linearly in response to rotation of the vehicle steering wheel. An electric assist motor has a shaft rotatable about a second axis spaced along the rack from the first axis. A second pinion is in engagement with the rack and is rotatable about the second axis by the motor. A cycloidal speed reducer is connected between the motor shaft and the second pinion.

### Brief Description of the Drawings

The foregoing and other features of the present invention will become apparent to one skilled in the art to which the present invention relates upon consideration of the following description of the invention with reference to the accompanying drawings, wherein:
Fig. 1 is a schematic view, partially in section, of a steering system including a cycloidal speed reducer in accordance with the present invention;
Fig. 2 is a longitudinal sectional view of the speed reducer of Fig. 1;
Fig. 3 is a radial sectional view of the speed reducer of Fig. 1;
Fig. 4 is a plan view of a balancer which forms a part of the speed reducer of Fig. 1; and
Fig. 5 is a view, similar to Fig. 2, of a speed reducer constructed in accordance with a second embodiment of the present invention.

### Description of Preferred Embodiments

The present invention relates to an electrically powered vehicle steering system in which an electric assist motor rotates a pinion to effect movement of a rack. The present invention is applicable to various steering system constructions.

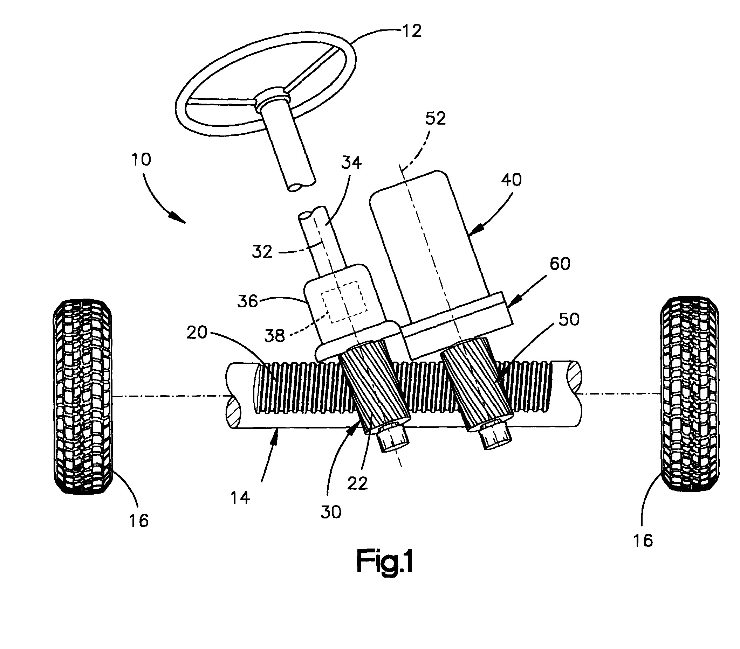

As representative of the present invention, Fig. 1 illustrates schematically a power assist steering system 10 for a vehicle. The steering system 10 includes a driver-operated steering wheel 12 operatively connected to a steering member or rack 14. The steering member 14 is coupled with the steerable wheels 16 of the vehicle through steering linkage (not shown) such as tie rods.

The steering member 14 includes a plurality of rack teeth 20. The rack teeth 20 on the steering member 14 are in meshing engagement with gear teeth 22 on a first pinion 30. The first pinion 30 is rotatable about a first axis 32 of the steering system 10.

The vehicle steering wheel 12 is connected for rotation with an input shaft 34 which extends into a torque sensor housing 36. The torque sensor housing 36 encloses a torque sensor indicated schematically at 38. The input shaft 34 is also mechanically coupled by a torsion bar (not shown), in a known manner, to the first pinion 30.

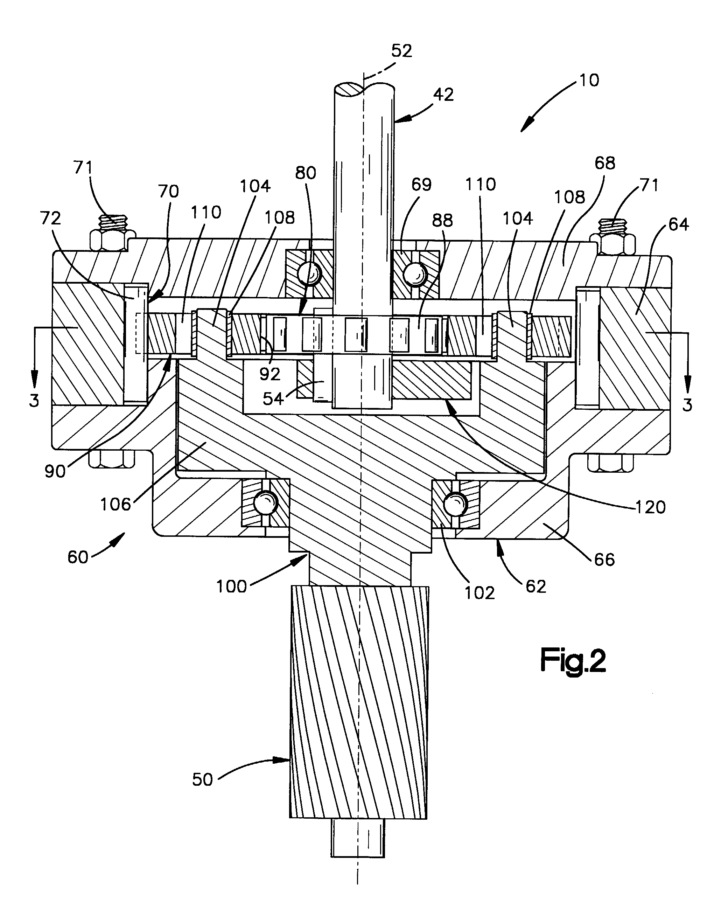

The torque sensor 38 is operative in a known manner to help control the operation of an electric assist motor 40. The motor 40 has an output shaft or motor shaft 42 (Fig. 2) which is rotatable, upon actuation of the electric motor, to rotate a second pinion 50 about a second axis 52. The second axis 52 is spaced along the rack 14 from the first axis 32. The second pinion 50 has gear teeth in meshing engagement with the rack teeth 20 on the steering member 14.

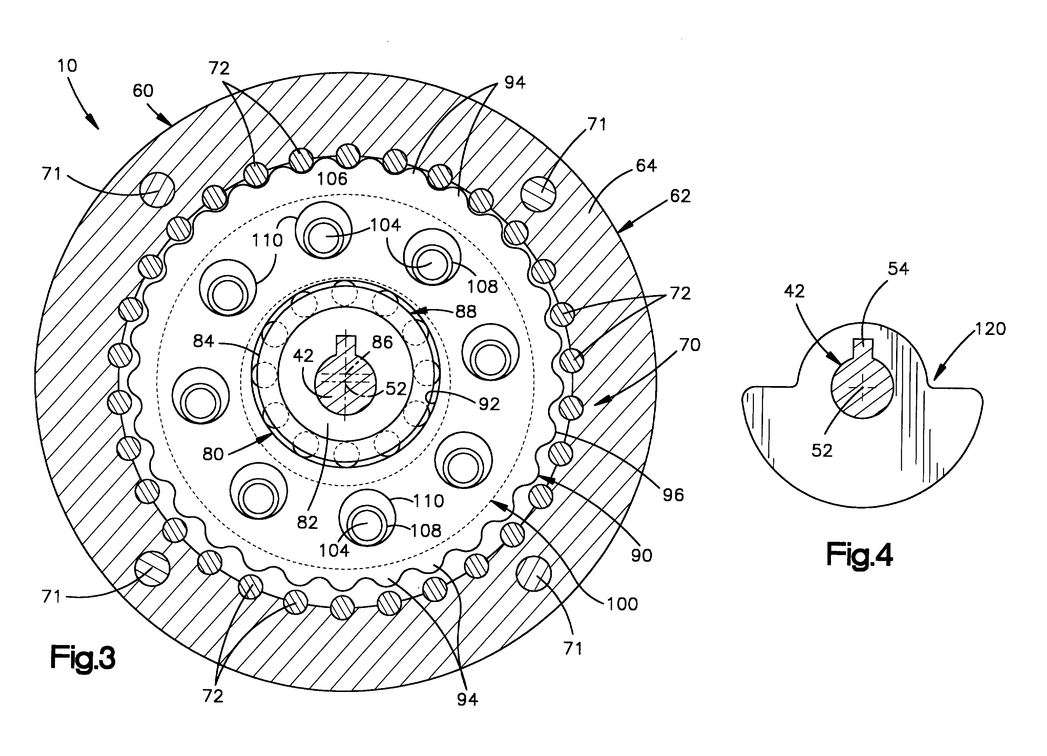

The steering system 10 includes a cycloidal speed reducer 60 for reducing the speed of rotation of the second pinion 50 as compared to the speed of rotation of the motor shaft 42. The speed reducer 60 (Figs. 2 and 3) includes a housing 62. The speed reducer housing 62 has a main body portion 64. The speed reducer housing 62 also includes a portion of a rack housing 66 which at least partially encloses the rack 14 (the rack housing is not shown in Fig. 1). The speed reducer housing 62 also includes an end cap 68 which may be an end cap, or other portion, of the motor 40. A bearing 69 in the end cap 68 supports the motor shaft 42 for rotation relative to the end cap. A plurality of bolts 71 secure the various portions of the housing 62.

The speed reducer 60 includes a first gear or fixed gear 70. The fixed gear 70 comprises a plurality of fixed gear teeth 72. In the illustrated embodiment, the fixed gear teeth 72 are cylindrical pins having axes extending parallel to the second axis 52. The pins 72 are mounted in a circular array on the inside of the main body portion 64 of the housing 62. The array of gear teeth 72 is centered on the second axis 52.

The speed reducer 60 includes a drive bearing 80. The drive bearing 80 includes a cam 82 (Fig. 3) which is secured to the motor shaft 42 by a key 54 for rotation with the motor shaft about the second axis 52. The cam 82 has a circular outer periphery 84 centered on an eccentric axis 86. The eccentric axis 86 is spaced apart from and extends parallel to the second axis 52. A circular roller bearing 88 is rotatable on the outer periphery 84 of the cam 82.

The speed reducer 60 includes a second or movable gear in the form of a drive gear 90 journalled on the roller bearing 88. The drive gear 90 has a flat, disc-like configuration and is disposed radially inward of the fixed gear 70. The drive gear 90 has a cylindrical inner peripheral surface 92 supported on the roller bearing 88.

The drive gear 90 includes a set of gear teeth 94 formed on the outer periphery 96 of the drive gear. Because the drive gear 90 is movable in the housing 62, the gear teeth 94 on the drive gear are movable relative to the fixed gear teeth 72 on the housing. The movable gear teeth 94 on the drive gear 90 are disposed in a circular array which is concentric with the inner peripheral surface 92 of the drive gear. The number of movable gear teeth 94 on the drive gear 90 is one less than the number of fixed gear teeth 72 on the fixed gear 70.

The outer diameter of the drive gear 90 is selected so that the cam 80 and the roller bearing 88 urge the drive gear 90 radially outward, at the apex of the cam, into meshing engagement with the fixed gear teeth 72 on the housing 62. The gears 70 and 90 engage at one location around the fixed gear 70, for example, to the top as viewed in Fig. 3 when the parts are in the position shown in Fig. 3. Because the drive gear 90 is mounted on the cam 80, the center of mass of the drive gear 90 is eccentric to the second axis 52.

A circular array of drive openings 110 is formed in the drive gear 90. The drive openings 110 are circular in configuration and are located radially between the inner and outer peripheries 92 and 96 of the drive gear. The array of drive openings 110 is concentric with the inner peripheral surface 92 of the drive gear 90.

The speed reducer 60 includes an output member 100 (Fig. 2). The output member 100 is fixed for rotation with the second pinion 50. The output member 100 may, if desired, be formed as one piece with the second pinion 50. A bearing 102 in the housing 62 supports the output member 100 for rotation relative to the housing about the second axis 52.

The output member 100 includes a circular array of cylindrical drive pins 104 which project axially from a main body portion 106 of the output member in a direction toward the drive gear 90. On each one of the drive pins 104 is journalled a bearing 108, such as a sleeve bearing. The drive pins 104 and the bearings 108 on the output member 100 are received in the drive openings 98 in the drive gear 90. The drive openings 110 in the drive gear 90 are larger in diameter than the bearings 108 on the drive pins 104, to accommodate the orbital movement of the drive gear about the second axis 52.

A balancer 120 is keyed to the motor shaft 42, on the opposite side of the drive gear 90 from the bearing 69. The balancer 120 has a center of mass which is eccentric to the second axis 52. The center of mass of the balancer 120 is located 180 degrees about the second axis 52 from the center of mass of the cam 80 and the drive gear 90. The balancer 120 minimizes vibration of the speed reducer 60 due to eccentric movement of the cam 80 and the drive gear 90 about the second axis 52.

Upon rotation of the vehicle steering wheel 12 by the driver of the vehicle, vehicle electric circuitry, including the torque sensor 38, determines whether the motor 40 should be operated to provide steering assist to move the steering member 14. If the motor 40 is operated, the motor shaft 42 is driven for rotation about the second axis 52.

The cam 82, which is keyed to the motor shaft 42, rotates about the second axis 52 in response to actuation of the motor 40. The rotational movement of the cam 82 is transmitted through the roller bearing 88 to the drive gear 90. The drive gear 90 orbits and rotates about the second axis 52, in a known manner.

The drive gear 90 moves relative to the fixed gear 70, by one tooth, for each rotation of the cam 82 about the second axis 52. In the illustrated embodiment, the drive gear 90 has twenty-nine gear teeth 94 while the fixed gear 70 has thirty gear teeth 72. Thus, twenty-nine rotations of the motor shaft 42 and the cam 82 about the second axis 52 result in one orbit of the drive gear 90 about the second axis.

The orbital and rotational movement of the drive gear 90 is transmitted through the bearings 108 and the drive pins 104 to the output member 100. The output member 100 rotates about the second axis 52 once for each rotation of the drive gear 90 about the second axis. In the illustrated embodiment, therefore, twenty-nine rotations of the motor shaft 42 and the cam 82 produce one rotation of the output member 100 about the second axis 52.

The second pinion 50 rotates with the output member 100 about the second axis 52. Rotation of the second pinion 50 effects linear movement of the rack 14 and turning movement of the steerable wheels 16 of the vehicle.

The cycloidal speed reducer 60 is smaller in diameter than a helical gear speed reducer having the same load capacity and reduction ratio. This results because the diameter ratio between meshing gears determines the reduction ratio in a helical gear speed reducer. A relatively high reduction ratio, such as twenty-nine to one, requires a relatively large diameter helical gear speed reducer.

The cycloidal speed reducer 60 also is substantially shorter than other speed reducers of the same load capacity and reduction ratio. This reduced axial length is important because the stack height of the speed reducer, that is, the axial extent of the reducer between the assist motor and the second pinion, is a critical dimension in providing efficient packaging of an electrically assisted steering system.

The cycloidal speed reducer 60 has a relatively high load capacity because there are multiple gear teeth (up to between seven and nine) in at least partial contact at all times. In addition, the drive gear 90 has straight tooth profiles, which are relatively inexpensive to manufacture. The drive gear 90 can be molded from plastic rather than made from metal, to reduce cost and weight as needed for an application such as a small car. Making the drive gear 90 from plastic rather than metal is acceptable because the load is shared over a greater number of teeth 94 as compared to other designs of speed reducers.

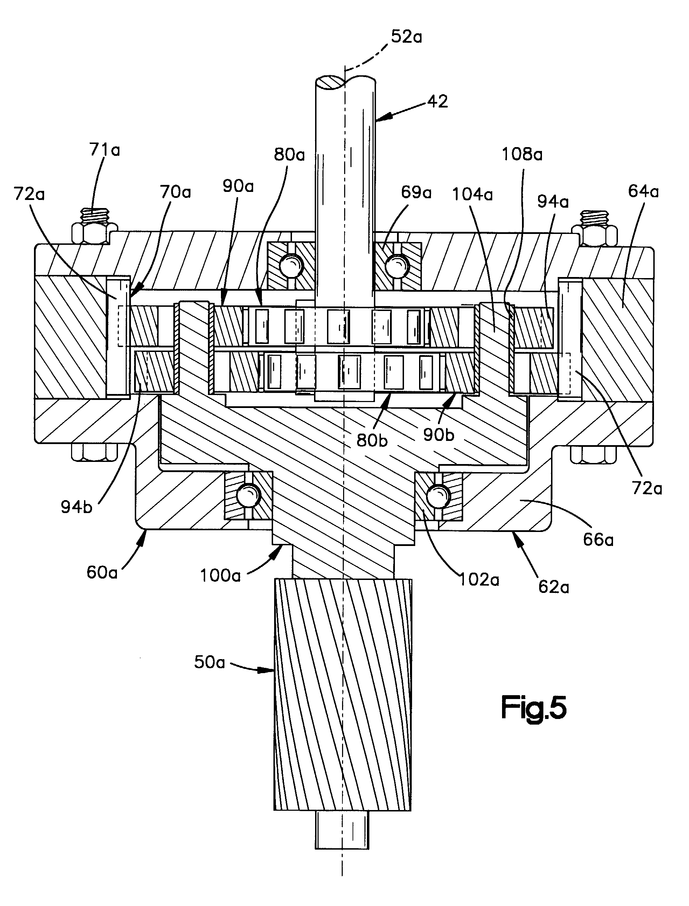

Fig. 5 illustrates a speed reducer 60a constructed in accordance with a second embodiment of the present invention. The speed reducer 60a is generally similar in construction and operation to the speed reducer 60 illustrated in Figs. 1-4. Parts of the speed reducer 60a which are the same as or similar to corresponding parts of the speed reducer 60 are given the same reference numerals with the suffix "a" added for clarity.

The speed reducer 60a includes a second drive gear 90b and a second drive bearing 80b, rather than only one drive gear and a balancer. The drive gear 90b has a center of mass which is located 180 degrees about the second axis 52a from the center of mass of the drive gear 90a. The drive gear 90b has external gear teeth 94b which are in meshing engagement with the fixed gear teeth 72a at an area 180 degrees about the second axis 52a from the area of engagement between the drive gear 90a and the fixed gear teeth.

The drive pins and bearings 104a and 108a of the output member 100a are lengthened to receive the driving force of both drive gears 90a and 90b. The speed reducer 60a, because it has two drive gears rather than only one, can transmit more load than the speed reducer 60, without an increase in overall size. Both drive gears 90a and 90b can be made from plastic rather than metal.

From the above description of the invention, those skilled in the art will perceive improvements, changes and modifications in the invention. Such improvements, changes and modifications within the skill of the art are intended to be covered by the appended claims.

According to its broadest aspect the invention relates to an electric power assist rack and pinion steering system for a vehicle having steerable wheels movable upon rotation of a vehicle steering wheel, said system comprising: a rack movable linearly to effect steering movement of the steerable wheels of the vehicle; a first pinion in engagement with said rack and connected with the vehicle steering wheel for rotation about a first axis to move said rack linearly in response to rotation of the vehicle steering wheel; and an electric assist motor having a shaft rotatable about a second axis spaced along said rack from the first axis.

It should be noted that the objects and advantages of the invention may be attained by means of any compatible combination(s) particularly pointed out in the items of the following summary of the invention and the appended claims.

### SUMMARY OF THE INVENTION

1. An electric power assist rack and pinion steering system for a vehicle having steerable wheels movable upon rotation of a vehicle steering wheel, said system comprising:
   a rack movable linearly to effect steering movement of the steerable wheels of the vehicle;
   a first pinion in engagement with said rack and connected with the vehicle steering wheel for rotation about a first axis to move said rack linearly in response to rotation of the vehicle steering wheel;
   an electric assist motor having a shaft rotatable about a second axis spaced along said rack from the first axis;
   a second pinion in engagement with said rack and rotatable about said second axis by said motor; and
   a cycloidal speed reducer connected between said motor shaft and said second pinion.
2. A steering system wherein said cycloidal speed reducer comprises:
   a first gear;
   a second gear in meshing engagement with said first gear, said second gear being rotatable and orbital relative to said first gear;
   an eccentric drive member fixed for rotation with said motor shaft about said second axis, said drive member supporting said second gear for orbital movement about said second axis;
   an output member fixed for rotation with said second pinion about said second axis; and
   means for effecting rotation of said output member about said second axis in response to orbital movement of said second gear about said second axis.
3. A steering system wherein said means for effecting rotation comprises an array of drive pins on said output member which project axially into drive openings in said second gear, said drive openings being larger than said drive pins.
4. A steering system wherein said second gear is made from plastic.
5. A steering system wherein said second gear comprises a pair of axially spaced drive gears rotatable with each other about said second axis, each one of said drive gears having a center of mass eccentric from said second axis, the centers of mass of said drive gears being offset from each other 180 degrees about said second axis.
6. A steering system wherein said cycloidal speed reducer includes a housing having a set of internal gear teeth, and a first drive gear supported for rotational and orbital movement about said second axis, said first drive gear including a set of external gear teeth, said external gear teeth numbering one less than said internal gear teeth on said housing.
7. A steering system having a reduction ratio of about twenty-nine to one.
8. An electric power assist rack and pinion steering system for a vehicle having steerable wheels movable upon rotation of a vehicle steering wheel, said system comprising:
   a rack movable linearly to effect steering movement of the steerable wheels of the vehicle;
   a first pinion in engagement with said rack and connected with the vehicle steering wheel for rotation about a first axis to move said rack linearly in response to rotation of the vehicle steering wheel;
   an electric assist motor having a shaft rotatable about a second axis spaced along said rack from the first axis;
   a second pinion in engagement with said rack and rotatable about said second axis by said motor; and
   a speed reducer connected between said motor shaft and said second pinion, said speed reducer comprising:
   a housing having a plurality of internal gear teeth disposed in a circular array centered on said axis;
   a first drive gear disposed radially inward of said gear teeth on said housing, said first drive gear having external gear teeth in meshing engagement with said internal gear teeth on said housing;
   an eccentric drive bearing disposed radially inward of said first drive gear and supporting said first drive gear in said housing for orbital movement about said second axis, said eccentric drive bearing being fixed for rotation with said motor shaft about said second axis;
   an output member supported in said housing for rotation about said second axis, said second pinion being fixed to said output member for rotation with said output member about said second axis; and
   means for effecting rotation of said output member about said second axis in response to orbital movement of said. first drive gear about said second axis.
9. A steering system wherein said motor includes a housing which at least partially encloses said speed reducer.
10. A steering system wherein said means for effecting rotation comprises an array of drive pins on said output member which project axially into drive openings in said drive gear, said drive openings being larger than said drive pins.
11. A steering system including a rack housing at least partially enclosing said rack, said output member being supported for rotation in said rack housing.
12. A steering system wherein said drive gear is made from plastic.
13. A steering system including a second drive gear spaced axially from said first drive gear, each one of said first and second drive gears having a center of mass eccentric from said second axis, the center of mass of said first drive gear being offset 180 degrees about said second axis from the center of mass of said second drive gear.
14. A steering system including a set of movable gear teeth formed on an outer periphery of said drive gear, said movable gear teeth numbering one less than said internal gear teeth on said housing.
15. A steering system wherein said output member rotates once about said second axis for each twenty-nine rotations of said motor shaft about said second axis.

## Claims

1. An electric power assist rack and pinion steering system for a vehicle having steerable wheels movable upon rotation of a vehicle steering wheel, said system comprising:
a rack movable linearly to effect steering movement of the steerable wheels of the vehicle;
a first pinion in engagement with said rack and connected with the vehicle steering wheel for rotation about a first axis to move said rack linearly in response to rotation of the vehicle steering wheel;
an electric assist motor having a shaft rotatable about a second axis spaced along said rack from the first axis;
a second pinion in engagement with said rack and rotatable about said second axis by said motor; and
a cycloidal speed reducer connected between said motor shaft and said second pinion.

2. A steering system as set forth in claim 1 wherein said cycloidal speed reducer comprises:
a first gear;
a second gear in meshing engagement with said first gear, said second gear being rotatable and orbital relative to said first gear;
an eccentric drive member fixed for rotation with said motor shaft about said second axis, said drive member supporting said second gear for orbital movement about said second axis;
an output member fixed for rotation with said second pinion about said second axis; and
means for effecting rotation of said output member about said second axis in response to orbital movement of said second gear about said second axis.

3. A steering system as set forth in claim 2 wherein said means for effecting rotation comprises an array of drive pins on said output member which project axially into drive openings in said second gear, said drive openings being larger than said drive pins.

4. A steering system as set forth in claim 1 wherein said second gear is made from plastic.

5. A steering system as set forth in claim 1 wherein said second gear comprises a pair of axially spaced drive gears rotatable with each other about said second axis, each one of said drive gears having a center of mass eccentric from said second axis, the centers of mass of said drive gears being offset from each other 180 degrees about said second axis.

6. A steering system as set forth in claim 1 wherein said cycloidal speed reducer includes a housing having a set of internal gear teeth, and a first drive gear supported for rotational and orbital movement about said second axis, said first drive gear including a set of external gear teeth, said external gear teeth numbering one less than said internal gear teeth on said housing.

7. A steering system as set forth in claim 1 having a reduction ratio of about twenty-nine to one.

8. An electric power assist rack and pinion steering system for a vehicle having steerable wheels movable upon rotation of a vehicle steering wheel, said system comprising:
a rack movable linearly to effect steering movement of the steerable wheels of the vehicle;
a first pinion in engagement with said rack and connected with the vehicle steering wheel for rotation about a first axis to move said rack linearly in response to rotation of the vehicle steering wheel;
an electric assist motor having a shaft rotatable about a second axis spaced along said rack from the first axis;
a second pinion in engagement with said rack and rotatable about said second axis by said motor; and
a speed reducer connected between said motor shaft and said second pinion, said speed reducer comprising:
a housing having a plurality of internal gear teeth disposed in a circular array centered on said axis;
a first drive gear disposed radially inward of said gear teeth on said housing, said first drive gear having external gear teeth in meshing engagement with said internal gear teeth on said housing;
an eccentric drive bearing disposed radially inward of said first drive gear and supporting said first drive gear in said housing for orbital movement about said second axis, said eccentric drive bearing being fixed for rotation with said motor shaft about said second axis;
an output member supported in said housing for rotation about said second axis, said second pinion being fixed to said output member for rotation with said output member about said second axis; and
means for effecting rotation of said output member about said second axis in response to orbital movement of said first drive gear about said second axis.

9. A steering system as set forth in any of the preceding claims wherein said motor includes a housing which at least partially encloses said speed reducer,
and/or wherein preferably said means for effecting rotation comprises an array of drive pins on said output member which project axially into drive openings in said drive gear, said drive openings being larger than said drive pins,
and/or further preferably including a rack housing at least partially enclosing said rack, said output member being supported for rotation in said rack housing,
and/or wherein preferably said drive gear is made from plastic,
and/or further preferably including a second drive gear spaced axially from said first drive gear, each one of said first and second drive gears having a center of mass eccentric from said second axis, the center of mass of said first drive gear being offset 180 degrees about said second axis from the center of mass of said second drive gear,
and/or further preferably including a set of movable gear teeth formed on an outer periphery of said drive gear, said movable gear teeth numbering one less than said internal gear teeth on said housing,
and/or wherein preferably said output member rotates once about said second axis for each twenty-nine rotations of said motor shaft about said second axis.

10. An electric power assist rack and pinion steering system for a vehicle having steerable wheels movable upon rotation of a vehicle steering wheel, said system comprising:
a rack movable linearly to effect steering movement of the steerable wheels of the vehicle;
a first pinion in engagement with said rack and connected with the vehicle steering wheel for rotation about a first axis to move said rack linearly in response to rotation of the vehicle steering wheel; and
an electric assist motor having a shaft rotatable about a second axis spaced along said rack from the first axis.
